# EUROPÄISCHE PATENTSCHRIFT

(11) **EP 0 782 909 B1**
(45) Veröffentlichungstag und Bekanntmachung des Hinweises auf die Patenterteilung: **19.03.2003**
(21) Anmeldenummer: 96119748.0
(22) Anmeldetag: 10.12.1996
(51) Int. Cl.: B29C 47/00, B29B 7/60

(54) **Verfahren zur Herstellung von Gegenständen aus faserverstärkten Thermoplasten**
Method of manufacturing articles from fiber reinforced thermoplastics
Procédé de fabrication d'articles à partir de matières thermoplastiques renforcées avec des fibres

(30) Priorität: 27.12.1995 DE 19548854
(43) Veröffentlichungstag der Anmeldung: 09.07.1997
(73) Patentinhaber: Johnson Controls Interiors GmbH & Co. KG, 42285 Wuppertal (DE)
(72) Erfinder: Heber, Michael, Dr., 47929 Grefrath (DE); Rosenkranz, Leo, 47809 Krefeld (DE); Nebelung, Günter, 47647 Kerken (DE); Kreitlow, Reinhard, 47929 Grefrath (DE); Ingendae, Markus, 47929 Grefrath (DE); Kleinholz, Rudolf, Dr., 52146 Würselen (DE)
(74) Vertreter: Zapf, Christoph, Dipl.-Ing.

(56) Entgegenhaltungen:
- EP-A- 0 426 619
- EP-A- 0 774 337
- GB-A- 1 055 395
- US-A- 4 708 623

## Beschreibung

Die Erfindung betrifft ein Verfahren zur Herstellung von Gegenständen, insbesondere Formteilen, aus faserverstärkten thermoplastischen Kunststoffen durch Mischen des thermoplastischen Kunststoffs mit Verstärkungsfasern, wie Glasfasern, Mischen, Walken und Plastifizieren unter Wärmezufuhr in einem Schnecken-Extruder und Extrudieren der plastifizierten Masse zur Formgebung, wobei der thermoplastische Kunststoff in Pulverform in Mischung mit den Verstärkungsfasern dem Schnecken-Extruder zugeführt wird.

Wenn der thermoplastische Kunststoff nicht in Pulverform in Mischung mit den Verstärkungsfasern dem Schnecken-Extruder zugeführt wird, ist nicht möglich, die gesamte zur Plastifizierung des thermoplastischen Kunststoffs benötigte Wärmemenge von außen in den Schnecken-Extruder einzuleiten. Die Wandung des Extrudergehäuses würde dann zu heiß - mit der Folge, daß sich an seiner Innenoberfläche dünnflüssiges thermoplastisches Material ansammelt, wodurch die Konsistenz des Materials leidet. Aufgrund der schlechten Wärmeleitfähigkeit von Kunststoffen würde die Plastifizierung allein durch Wärmezufuhr von außen in das Extruder-Innere zudem zu lange dauern. In einem solchen Fall wird daher eine kombinierte Wärmeentwicklung praktiziert, nämlich einerseits durch Wärmezufuhr von außen durch Einleiten von Wärme durch die Wandung des Extrudergehäuses in das Innere des Extruders und die darin befindliche thermoplastische Kunststoffmasse und andererseits durch Einbringen von Friktionsenergie durch die Einwirkung der Schnecke bei ihrem Rotieren im Extrudergehäuse auf die von ihr bewegte thermoplastische Masse. Die von der rotierenden Schnecke auf die Masse ausgeübte kinetische Energie wird in Wärmeenergie umgewandelt, die zur zusätzlichen Erwärmung der Masse genutzt werden kann. Wird dabei zuviel Kraft auf die Masse von der Schnecke ausgeübt, kommt es zum Bruch und zur Verkürzung der mit dem Thermoplast vermischten verstärkungsfasern. Hierdurch leidet die Festigkeit des Produkts.

Um diese nachteilige Faserschädigung zu umgehen, wurde schon eine Zwischenstufe der Halbzeugherstellung eingeschaltet. So werden z.B. Glasmatten hergestellt und mit einer Thermoplastmatrix imprägniert, oder Glasfasern werden in einem Extrusionsprozeß mit Thermoplastschmelze umhüllt und anschließend wird die Masse granuliert. In einem solchen Prozeß sind zwar Formteile mit gut erhaltenen und eingebetteten Verstärkungsfasern herstellbar, aber der zusätzliche Aufwand für die Halbzeugherstellung ist erheblich.

Ein Verfahren der gattungsgemäßen Art ist einerseits aus der EP-A-0 774 337 und andererseits aus der GB-A-1 055 395 bekannt. Gemäß der GB-A-1 055 395 wird der thermoplastische Kunststoff in Granulatform, beispielsweise ein Acrylnitril-Styren-Copolymer mit einer Teilchengröße von 0,074 bis 0,42 mm, in Mischung mit den Verstärkungsfasern in einem Schnekken-Extruder gemischt, gewalkt und unter Wärmezufuhr von außen plastifiziert. In der unmittelbar am Ausgang des Extruders ausgebildeten Spritzdüse in der sich ein hoher Staudruck ausbildet, kann es dabei aber nachteiligerweise zu einem verstärkten Bruch der Fasern kommen.

Aus der US-A-4 708 623 ist ein Verfahren zur Herstellung von Gegenständen aus faserverstärkten thermoplastischen Kunststoffen durch Mischen des thermoplastischen Kunststoffs mit organischen Verstärkungsfasern, wie Gemüsefasern oder Fasern aus Altpapier, bekannt. An die Faserlänge im Fertigprodukt werden dabei keine Anforderungen gestellt. Auch nach diesem bekannten Verfahren erfolgt ein Mischen, Walken und Plastifizieren unter Wärmezufuhr in einem Extruder und ein Extrudieren der plastifizierten Masse. Da es während des Mischens und Aufheizens infolge der in den organischen Füllerbestandteilen enthaltenen Feuchtigkeit zu einer Dampfentwicklung und damit zu einem Druckanstieg kommt, ist in einer speziellen Zone des Extruders eine Querschnittserweiterung vorgesehen, um den Druck wieder zu reduzieren.

Der vorliegenden Erfindung liegt die Aufgabe zugrunde, ein Verfahren zur Herstellung von Gegenständen aus faserverstärkten thermoplastischen Kunststoffen der gattungsgemäßen Art anzugeben, nach dem Formteile aus langfaserverstärktem thermoplastischen Kunststoff einfach und mit nur geringer Faserschädigung hergestellt werden können.

Diese Aufgabe wird bei dem gattungsgemäßen Verfahren erfindungsgemäß dadurch gelöst, daß das aus dem thermoplastischen Kunststoff und den Verstärkungsfasern bestehende Material bei niedrigem Staudruck im Extruder plastifiziert und als Zuschnitt ausgestoßen wird.

Durch die erfindungsgemäße Maßnahme wird die gestellte Aufgabe gelöst. Durch den niedrigen Staudruck im Extruder und dem Ausstoßen als Zuschnitt, bleiben die Verstärkungsfaser im Zuschnitt weitestgehend schädigungsfrei erhalten. Der Zuschnitt kann dann mit Vorteil in ein Preßwerkzeug eingelegt und durch Fließpressen zu einem Formteil verarbeitet werden.

Dabei wird es bevorzugt, daß das thermoplastische Kunststoffpulver dem Schnecken-Extruder mit einer mittleren Teilchengröße von kleiner als 1 mm, vorzugsweise kleiner als 0,5 mm, zugeführt wird.

Durch die erfindungsgemäße Maßnahme wird die gestellte Aufgabe gelöst. Infolge der Feinkörnigkeit des mit den Verstärkungsfasern gemischten und dem Schnecken-Extruder zugeführten thermoplastischen Materials erfolgt schon bei geringerem Kraftaufwand durch die Einwirkung der rotierenden Schnecke auf die im Extruder befindliche thermoplastische Masse, also mit weniger Friktionsenergie, die Plastifizierung der Masse. Die Folge ist, daß die langen Verstärkungsfasern in der thermoplastischen Masse unverkürzt erhalten bleiben und ihren Verstärkungseffekt im Formteil voll zur Geltung bringen können. Durch die geringe Korngröße des Pulvers wird eine Vorverteilung mit den Verstärkungsfasern erreicht, so daß von Beginn des Aufschmelzungsprozesses an eine größere Kontaktfläche zwischen Fasern und Matrix zur Verfügung steht. Dadurch wird bereits von Prozeßbeginn an eine verbesserte Faserbenetzung bei schonendem Aufheizen erreicht. Eine hohe Friktionsenergie ist nicht mehr erforderlich, so daß die Faser, wenn überhaupt, nur gering geschädigt wird. In der Folge erreichen die so hergestellten Teile erheblich bessere mechanische Eigenschaften, insbesondere nachzuweisen an einer deutlich erhöhten Schlagzähigkeit.

Als Verstärkungsfasern werden meist Glasfasern eingesetzt. Es sind aber auch andere Verstärkungsfasern wie Naturfasern, z.B. Flachs, mineralische Fasern oder auch synthetische Fasern, denkbar. Diese können entweder in Vermischaung mit dem thermoplastischen Pulver dem Schnecken-Extruder zugeführt werden, oder die dosierte Zuführung der Bestandteile geschieht getrennt und die Mischung erfolgt erst im Extruder.

In einer bevorzugten Ausführungsform wird als Pulver ein nichtkompoundiertes Rohpolymer-eingesetzt, das bereits im Polymerisationsprozeß in der geeigneten feinen Korngröße anfällt. Die notwendigen Zuschlagsstoffe, wie Stabilisatoren, Flammschutzmittel o.ä., können in Granulat- oder Pulverform in einer Menge bis ca. 10 Masse-% zugesetzt werden.

Anhand des folgenden Beispiels wird die Erfindung näher erläutert.

### Beispiel

In einem Schnecken-Extruder wird eine Mischung aus 67 Gew.-% Polypropylen-(PP-)Pulver mit einer Korngröße ca. 200 µm, 30 Gew.-% Glasfasern (12 mm Länge, 17 µm Durchmesser) sowie zwei Masterbatches (Granulatgröße ca. 2,5 mm) jeweils 1 bzw. 2 Gew.% zur thermischen Stabilisierung bzw. zur Kopplung der Fasern an das PP über einen Trichter zudosiert.

Bei niedrigem Staudruck wird das Material im Extruder plastifiziert und als Zuschnitt ausgestoßen. Anschließend wird der Zuschnitt in ein Preßwerkzeug eingelegt und durch Fließpressen zu einem Formteil verarbeitet.

## Patentansprüche

1. Verfahren zur Herstellung von Gegenständen, insbesondere Formteilen, aus faserverstärkten thermoplastischen Kunststoffen durch Mischen des thermoplastischen Kunststoffs mit Verstärkungsfasern, wie Glasfasern, Mischen, Walken und Plastifizieren unter Wärmezufuhr in einem Schnecken-Extruder und Extrudieren der plastifizierten Masse zur Formgebung, wobei der thermoplastische Kunststoff in Pulverform in Mischung mit den Verstärkungsfasern dem Schnecken-Extruder zugeführt wird,
**dadurch gekennzeichnet, daß** das aus dem thermoplastischen Kunststoff und den Verstärkungsfasern bestehende Material bei niedrigem Staudruck im Extruder plastifiziert und als Zuschnitt ausgestoßen wird.

2. Verfahren nach Anspruch 1,
**dadurch gekennzeichnet, daß** das thermoplastische Kunststoffpulver dem Schnecken-Extruder mit einer mittleren Teilchengröße von kleiner als 1 mm zugeführt wird.

3. Verfahren nach Anspruch 2,
**dadurch gekennzeichnet, daß** das thermoplastische Pulver dem Schnecken-Extruder mit einer mittleren Teilchengröße von kleiner als 0,5 mm zugeführt wird.

4. Verfahren nach einem der Ansrpüche 1 bis 3,
**dadurch gekennzeichnet, daß** das thermoplastische Pulver und die Verstärkungsfaser dem Schnecken-Extruder vorgemischt zugeführt werden.

5. Verfahren nach einem der Ansprüche 1 bis 3,
**dadurch gekennzeichnet, daß** das thermoplastische Pulver und die Verstärkungsfaser dem Schnecken-Extruder ohne externe Vormischung dosiert zugeführt werden.

6. Verfahren nach einem der Ansprüche 1 bis 5,
**dadurch gekennzeichnet, daß** als Verstärkungsfasern geschnittene Glasfasern zugeführt werden.

7. Verfahren nach einem der Ansprüche 1 bis 5,
**dadurch gekennzeichnet, daß** als Verstärkungsfasern geschnittene Naturfasern zugeführt werden.

8. Verfahren nach einem der Ansprüche 1 bis 5,
**dadurch gekennzeichnet, daß** als Verstärkungsfasern geschnittene synthetische Fasern zugeführt werden.

9. Verfahren nach einem der Ansprüche 1 bis 8,
**dadurch gekennzeichnet, daß** das Pulver als nichtkompoundiertes Rohpolymer, insbesondere Polypropylen, eingesetzt und mit bis 10 Masse-% Zuschlagstoffen, wie Stabilisatoren, Flammschutzmittel u.a., versetzt.

10. Verfahren nach einem der Ansprüche 1 bis 9,
**dadurch gekennzeichnet, daß** der Zuschnitt in ein Preßwerkzeug eingelegt und durch Fließpressen zu einem Formteil verarbeitet wird.

## Claims

1. Process for producing articles, in particular mouldings, from fibre-reinforced thermoplastics, by mixing the thermoplastic with reinforcing fibres, such as glass fibres, mixing, kneading and plastifying, with introduction of heat, in a screw extruder, and extruding the plastified composition for shaping, where the thermoplastic in powder form is introduced in a mixture with the reinforcing fibres to the screw extruder,
**characterized in that** the material composed of the thermoplastic and of the reinforcing fibres is plastified at low dynamic pressure in the extruder and is discharged as a cut-to-size product.

2. Process according to Claim 1,
**characterized in that** the thermoplastic powder is introduced to the screw extruder with an average particle size smaller than 1 mm.

3. Process according to Claim 2,
**characterized in that** the thermoplastic powder is introduced to the screw extruder with an average particle size smaller than 0.5 mm.

4. Process according to any of Claims 1 to 3,
**characterized in that** the thermoplastic powder and the reinforcing fibre are in premixed form when introduced to the screw extruder.

5. Process according to any of Claims 1 to 3,
**characterized in that** the thermoplastic powder and the reinforcing fibre have not undergone external premixing when introduced as feed to the screw extruder.

6. Process according to any of Claims 1 to 5,
**characterized in that** the reinforcing fibres introduced comprise chopped glass fibres.

7. Process according to any of Claims 1 to 5,
**characterized in that** the reinforcing fibres introduced comprise chopped natural fibres.

8. Process according to any of Claims 1 to 5,
**characterized in that** the reinforcing fibres introduced comprise chopped synthetic fibres.

9. Process according to any of Claims 1 to 8,
**characterized in that** the powder [lacuna] used in the form of uncompounded untreated polymer, in particular polypropylene, and [lacuna] mixed with up to 10% by weight of additives, such as stabilizers, flame retardant, etc.

10. Process according to any of Claims 1 to 9,
**characterized in that** the cut-to-size product is inserted into a compression mould and is processed by flow moulding to give a moulding,

## Revendications

1. Procédé de fabrication d'objets, en particulier d'objet moulés, à partir de matériau thermoplastique renforcé par des fibres, par mélange du matériau thermoplastique avec des fibres de renfort telles que des fibres de verre, mélange, moulage et plastification, avec apport de chaleur, dans une extrudeuse à vis, et extrusion de la masse plastifiée pour façonnage, le matériau thermoplastique étant amené à l'extrudeuse à vis sous forme d'une poudre en mélange avec les fibres de renfort, **caractérisé en ce que** le matériau, constitué du matériau thermoplastique et des fibres de renfort, est plastifié en présence d'une faible pression de retenue dans l'extrudeuse, et est expulsé sous forme d'une découpe.

2. Procédé selon la revendication 1, **caractérisé en ce que** la poudre du matériau thermoplastique est amenée à l'extrudeuse à vis en présentant une granulométrie moyenne inférieure à 1 mm.

3. Procédé selon la revendication 2, **caractérisé en ce que** la poudre thermoplastique est amenée à l'extrudeuse à vis en présentant une granulométrie moyenne inférieure à 0,5 mm.

4. Procédé selon l'une des revendications 1 à 3, **caractérisé en ce que** la poudre thermoplastique et les fibres de renfort sont amenées à l'extrudeuse à vis à l'état pré-mélangé.

5. Procédé selon l'une des revendications 1 à 3, **caractérisé en ce que** la poudre thermoplastique et les fibres de renfort sont amenées à l'extrudeuse à vis après avoir été dosées et sans pré-mélange externe.

6. Procédé selon l'une des revendications 1 à 5, **caractérisé en ce que** les fibres de renfort amenées sont des fibres de verre coupées.

7. Procédé selon l'une des revendications 1 à 5, **caractérisé en ce que** les fibres de renfort amenées sont des fibres naturelles coupées.

8. Procédé selon l'une des revendications 1 à 5, **caractérisé en ce que** les fibres de renfort amenées sont des fibres synthétiques coupées.

9. Procédé selon l'une des revendications 1 à 8, **caractérisé en ce que** la poudre est utilisée sous forme d'un polymère brut non mélangé, en particulier du polypropylène, et est additionnée d'une quantité allant jusqu'à 10 % en masse d'adjuvants tels que des stabilisants, des agents d'ignifugation, etc.

10. Procédé selon l'une des revendications 1 à 9, **caractérisé en ce que** la découpe est insérée dans un moule à compression, et est mise en oeuvre par moulage par intrusion pour donner un objet moulé.
